Europäisches Patentamt

European Patent Office

Office européen des brevets

(19)

(11) Publication number: **0 365 217**
**A2**

# EUROPEAN PATENT APPLICATION

(12)

(21) Application number: **89310472.9**

(51) Int. Cl.⁵: **H02K 1/18**

(22) Date of filing: **12.10.89**

(30) Priority: **17.10.88 US 258401**

(43) Date of publication of application:
**25.04.90 Bulletin 90/17**

(84) Designated Contracting States:
**CH DE FR GB IT LI SE**

(71) Applicant: **GENERAL ELECTRIC COMPANY**
**1 River Road**
**Schenectady, N.Y. 12345(US)**

(72) Inventor: **Estrada, Luis Alberto**
**5 Avon Court**
**Clifton Park New York 12065(US)**

(74) Representative: **Smith, Thomas Ian Macdonald**
**et al**
**London Patent Operation G.E. Technical**
**Services Co. Inc. Burdett House 15-16**
**Buckingham Street**
**London WC2N 6DU(GB)**

(54) **Stator keybar installation using auxiliary plates.**

(57) Keybar slots (36) in support plates (20) of a large generator stator (26) are made substantially oversize (38) to accommodate the full probable distortion of the support plates occurring during fabrication of the stator frame. Keybars (28) are affixed (42) to an arrangement of one or (as shown) two auxiliary plates (40,46). The keybars are aligned within the oversize keybar slots, and then the auxiliary plates are affixed, e.g. welded (44,50) to the stator support plates.

Fig. 4

EP 0 365 217 A2

## STATOR KEYBAR INSTALLATION USING AUXILIARY PLATES

The present invention relates to dynamoelectric machines and, more particularly, to large AC generators.

A large AC generator employs a rotor that rotates within a stator to generate electricity. The rotor is magnetized by DC power in field windings to form one or more pairs of magnetic poles. The stator includes a large mass of magnetic material within which a plurality of stator windings are embedded. As the rotor rotates, the resulting rotation of the magnetic field induces AC electricity in the stator windings.

A large stator is built up within a stator frame by laying up individual arcuate laminae. Each lamina has two or more dovetail slots in its outer edge for engagement with a keybar. The keybars are affixed within the stator frame for this purpose.

For some smaller conventional generator stators, the keybars are extruded or pre-machined members having the required cross section. These are affixed in precision slots in the stator frame by welding or bolting. As the size of the generator stator increases, the cross section of the keybars also increases. With the largest generator stators, it is not practical or economical to install preformed keybars in precision slots. The stator frame becomes so distorted during fabrication that the locations of the precision slots may be displaced as much as, for example, one-half inch. This far exceeds the tolerances for positioning keybars which require accurate location within less than one-sixteenth inch.

One conventional solution includes deferring the forming of the slots in the stator frame until after fabrication. While this overcomes the problems of displacement due to distortion, techniques available for doing machining on the scale required for large generators requires precise layouts and special tools. Following machining of the slots, the keybars are attached by welding or bolting. When bolts are used, the additional complication of accurate bolthole placement must be overcome.

Another conventional solution provides for installing bars of stock in the stator frame with enough material to permit machining of the keybar shape in place after fabrication and attachment of the bars. This solution can exceed the capability of a manufacturing facility to perform the required accurate machining operations over such long distances and in materials of such large cross section.

It is an object of the invention to provide an arrangement permitting the installation of keybars in a manner which overcomes the drawbacks of the prior art.

In one aspect of the invention it provides a keybar system in which oversize slots are provided in support plates in a stator frame. Keybars are affixed in auxiliary plates having skirts that overlap the support plates about a substantial portion of the oversize slots. The auxiliary plates are affixed, thereby affixing the key bars.

In another aspect, the invention provides a generator stator having keybar slots in support plates that are made substantially oversize to accommodate the full probable distortion of the support plates occurring during fabrication of the stator frame. Keybars are affixed to pairs of auxiliary plates. The keybars are aligned within the oversize keybar slots, and then the auxiliary plates are affixed or welded to the stator support plates.

According to an embodiment of the invention, there is provided a stator comprising: a stator frame, a plurality of support plates extending radially inward from the stator frame, a plurality of laminae forming an armature, each of the laminae including at least one dovetail slot in an outer edge thereof, at least one keybar, at least one enlarged slot in an inner edge of the plurality of support plates, the at least one enlarged slot being large enough to provide a substantial clearance between itself and the at least one keybar at all possible conditions of the stator frame, at least one auxiliary plate affixed to the at least one keybar, the at least one auxiliary plate overlapping the at least one support plate, and extending substantially beyond the at least one enlarged slot, and means for affixing the at least one auxiliary plate to one of the plurality of support plates.

According to another embodiment there is provided a stator comprising: a stator frame, a plurality of parallel support plates extending radially inward from the stator frame, a plurality of laminae forming an armature, each of the laminae including at least one dovetail slot in an outer edge thereof, a plurality of keybars disposed parallel to a longitudinal axis of the stator frame, a plurality enlarged slots in an inner edge of the plurality of support plates, each of the plurality of support plates including corresponding enlarged slots for receiving the plurality of keybars, each of the plurality of enlarged slots being large enough to provide a substantial clearance between itself and its respective keybar at all possible conditions of the stator frame, a plurality of auxiliary plates, each of the plurality of auxiliary plates being affixed to one of the plurality of keybars at a position placing the a facing surface of the auxiliary plate immediately adjacent a surface of one of the plurality of support plates, each of the plurality of auxiliary plates overlapping its respective adjacent surface, and extending substantially beyond its respective enlarged slot, means for affixing each of the auxiliary plates to its respective support plate, and the substantial clearances permitting alignment of all of the plurality of keybars, regardless of distortion in the stator frame and the plurality of support plates.

The above, and other objects, features and advantages of the present invention will become apparent from the following description read in conjunction with the accompanying drawings, in which like reference numerals designate the same elements, and in which:

Fig. 1 is an end view, partially in cross section, of a schematic view of a large AC generator to illustrate general positional relationships of elements used in the description of the prior art and of the present invention;

Fig. 2 is an enlarged view of a portion of the large AC generator of Fig. 1, illustrating one technique used in the prior art for affixing keybars to support plates;

Fig. 3 is a further enlarged view of the vicinity of one of the prior-art keybars of Fig. 2;

Fig. 4 is a view, corresponding to Fig. 3, but of a technique for mounting keybars according to the present invention; and

Fig. 5 is a cross section taken along V-V in Fig. 4.

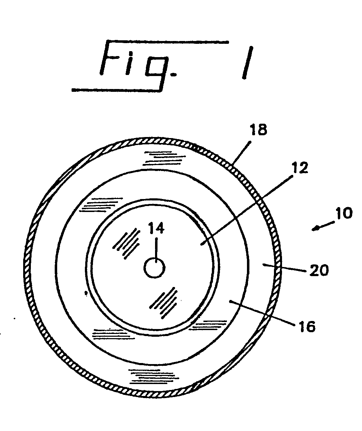

Referring now to Fig. 1, there is shown, generally at 10, a highly schematic end view, in partial cross section, of a generator. A rotor 12 is supported for rotation upon a shaft 14 within an armature 16. A stator frame 18 includes a plurality of annular support plates 20 (only one of which is shown) spaced apart along a longitudinal axis thereof.

Conventional elements such as field windings in rotor 12, bearings for supporting shaft 14, and armature windings in armature 16 are all omitted from Fig. 1 and the present description. It is believed that such conventional elements, being well known by all those skilled in the art, do not require description herein.

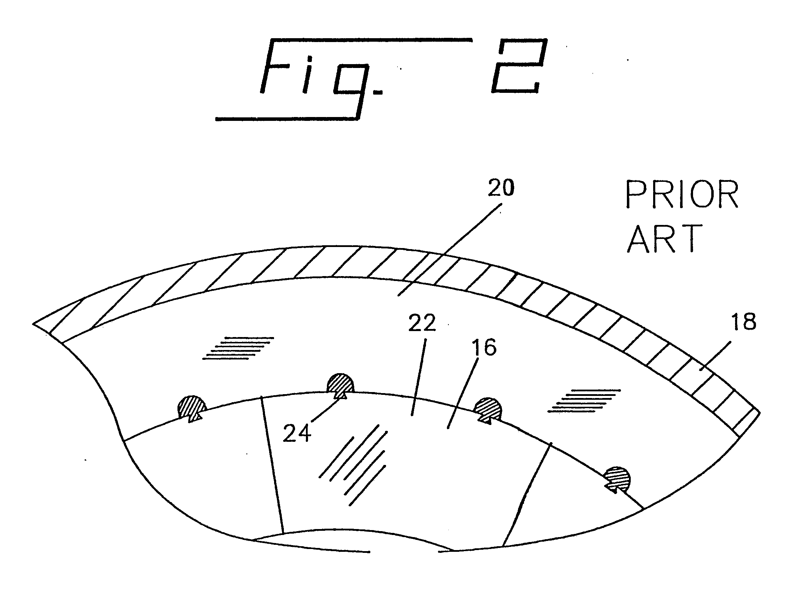

Referring now to Figs. 2 and 3, armature 16 is formed by stacking a plurality of thin, mutually insulated arcuate laminae 22 to form an annulus. Each lamina 22 includes two or more dovetail slots 24 fitting onto respective dovetails 26 of keybars 28. Keybar 28 includes a semi-cylindrical portion 30 fitting into a precision keybar slot 32. The junctions of keybar 28 with support plate 20 include welds 34.

As already mentioned, distortion in stator frame 18 and support plates 20, produced during fabrication of a large AC generator, causes unacceptable misalignment of corresponding keybar slots 32 on the plurality of support plates 20. Thus, it is not practical to form keybar slots 32 in support plates 20 before fabrication, as would be desired from a manufacturability standpoint.

A further possibility in the prior art, but not illustrated, includes bolting keybars 28 to their support plates 20. This possibility suffers a similar drawback in that the required bolt holes cannot be drilled before fabrication of stator frame 18, with support plates 20 installed therein.

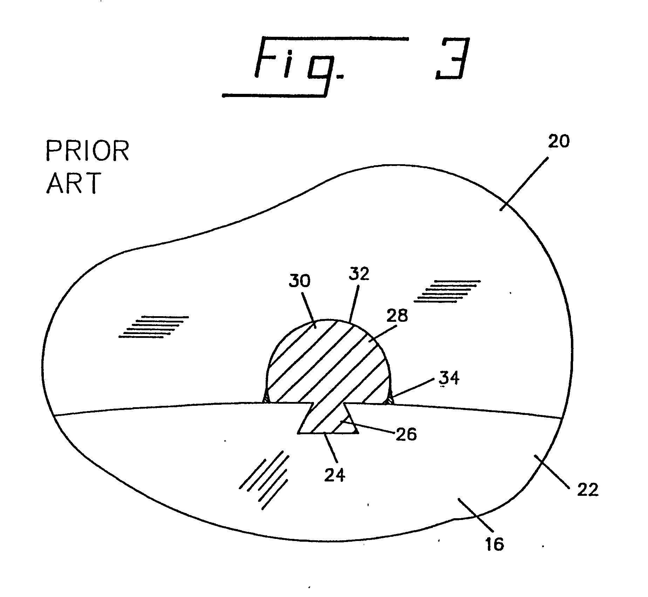

Referring now to Fig. 4, an embodiment of the invention is shown in which an enlarged slot 36 (shown in dashed line) is formed in support plate 20 thus leaving a substantial clearance 38 between itself and semi-cylindrical portion 30 of keybar 28. An auxiliary plate 40 is affixed to keybar 28 by a weld 42. Auxiliary plate 40 is, in turn, affixed to support plate 20 by a further weld 44.

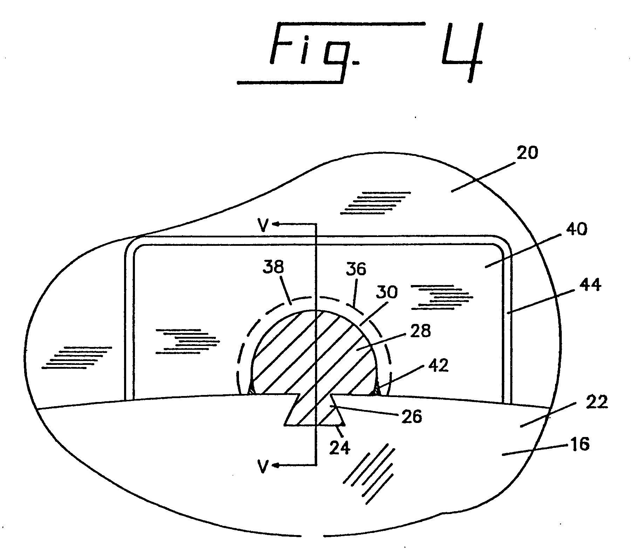

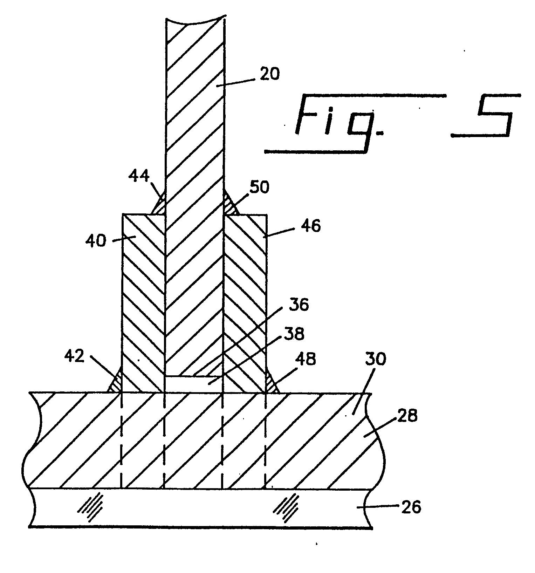

Referring now also to Fig. 5, a further auxiliary plate 46, on the opposite side of support plate 20, is affixed to keybar 28 by a weld 48 and to support plate 20 by a further weld 50.

Enlarged slots 36 are sized to produce clearances 38 that exceeds the maximum transverse distortion of support plate 20. Thus, auxiliary plates 40 and 46 can be installed in accurate positions, using simple jigs, prior to being welded in place. Accordingly, enlarged slots 36 can be formed in support plates 20 prior to fabrication, as is desired.

One skilled in the art will recognize that the technique for affixing auxiliary plates 40 and 46 to support plate 20 is not necessarily limited to welding. It is contemplated that, alternatively, auxiliary plates could be affixed to support plates by other means such as, for example, by bolting or riveting, and such other means for affixing should be considered to fall within the scope of the invention.

Having described preferred embodiments of the invention with reference to the accompanying drawings, it is to be understood that the invention is not limited to those precise embodiments, and that various changes and modifications may be effected therein by one skilled in the art without departing from the scope of the invention as defined in the appended claims.

## Claims

1. A stator comprising:
a stator frame;
a plurality of support plates extending radially inward from said stator frame;
a plurality of laminae forming an armature;
each of said laminae including at least one dovetail slot in an outer edge thereof;
at least one keybar;
at least one enlarged slot in an inner edge of said plurality of support plates;
said at least one enlarged slot being large enough to provide clearance between itself and said at least one keybar at all possible conditions of said stator frame;
at least one auxiliary plate affixed to said at least one keybar;
said at least one auxiliary plate overlapping said at least one support plate, and extending substantially beyond said at least one enlarged slot; and
means for affixing said at least one auxiliary plate to one of said plurality of support plates.

2. A stator according to claim 1 wherein said means for affixing includes a weld joining a substantial portion of said auxiliary plate to said one of said plurality of support plates.

3. A stator according to claim 1 wherein:
said at least one auxiliary plate includes first and second auxiliary plates;
said first auxiliary plate being affixed to a first side of said one of said support plates; and
said second auxiliary plate being affixed to a second, opposite, side of said one of said support plates.

4. A stator comprising:
a stator frame;
a plurality of parallel support plates extending radially inward from said stator frame;
a plurality of laminae forming an armature;
each of said laminae including at least one dovetail slot in an outer edge thereof;
a plurality of keybars disposed parallel to a longitudinal axis of said stator frame;
a plurality of enlarged slots in an inner edge of said plurality of support plates, each of said plurality of support plates including corresponding enlarged slots for receiving said plurality of keybars;
said plurality of enlarged slots being large enough to provide substantial clearances between themselves and their respective keybars;
a plurality of auxiliary plates;
each of said plurality of auxiliary plates being affixed to one of said plurality of keybars at a position placing a facing surface of said auxiliary plate immediately adjacent a surface of one of said plurality of support plates;
each of said plurality of auxiliary plates overlapping its respective adjacent surface, and extending substantially beyond its respective enlarged slot;
means for affixing each of said auxiliary plates to its respective support plate; and
said substantial clearances permitting alignment of all of said plurality of keybars, at all possible conditions of said stator frame regardless of distortion in said stator frame and said plurality of support plates.

5. A stator according to claim 4 wherein:
said plurality of support plates includes first and second auxiliary plates facing first and second opposed surfaces of each of said support plates;

said means for affixing includes first means for affixing each of said first auxiliary plates to each of said first surfaces; and
said means for affixing includes second means for affixing each of said second auxiliary plates to each of said second surfaces.

Fig. 1

# _Fig. 2_

20

22

16

18

24

EP 0 365 217 A2

# Fig. 3

PRIOR
ART

EP 0 365 217 A2

Fig. 4

EP 0 365 217 A2

Fig. 5

EP 0 365 217 A2